# EUROPEAN PATENT APPLICATION

(11) **EP 1 464 664 A1**
(43) Date of publication of application: **06.10.2004**
(21) Application number: 04251953.8
(22) Date of filing: 01.04.2004
(51) Int. Cl.: C08G 69/26, C07C 231/02, C07C 233/00

(54) **High-melting wax useful of sintering metals**

(30) Priority: 01.04.2003 US 459412 P
(71) Applicant: ROHM AND HAAS COMPANY, Philadelphia, Pennsylvania 19106-2399 (US)
(72) Inventor: Norris, Gene Kelly, West Chester, Ohio 45069 (US); Banavali, Rajiv Manohar, Rydal, Pennsylvania 19046 (US)
(74) Representative: Kent, Venetia Katherine

(57) **Abstract**

A wax containing the reaction product of: (a) 30% to 45% of a C₆-C₁₂ linear dicarboxylic acid; (b) 40% to 60% of a C₁₀-C₂₂ monocarboxylic acid; and (c) 12% to 20% of a diamine of formula H₂N(CH₂)ₙNH₂, wherein n is an integer from 2 to 6.

## Description

The present invention relates to a high-melting wax useful for sintering metals.

Promold™ 450 wax has been sold commercially for many years as a lubricant for metal sintering applications. It is made by reaction of approximately 24% to 28% sebacic acid, 61% to 65% stearic acid and 13% to 15% ethylene diamine. Promold^{TM} 450 wax begins to melt at a temperature of approximately 450°F (232°C). A wax having a higher melting point would be desirable for some metal sintering applications.

The problem addressed by this invention is to provide a wax having a higher melting point.

### STATEMENT OF THE INVENTION

The present invention is directed to a wax containing the reaction product of: (a) 30% to 45% of a C₆-C₁₂ linear dicarboxylic acid; (b) 40% to 60% of a C₁₀-C₂₂ monocarboxylic acid; and (c) 12% to 20% of a diamine of formula H₂N(CH₂)ₙNH₂, wherein n is an integer from 2 to 6.

### DETAILED DESCRIPTION OF THE INVENTION

Unless otherwise specified, temperatures are in degrees centigrade (°C), and references to percentages (%) are by weight.

Preferably, the wax comprises a reaction product of a C₈-C₁₀ linear dicarboxylic acid, a C₁₆-C₁₈ monocarboxylic acid, and a diamine in which n is 2 or 3. In one preferred embodiment of the invention, the linear dicarboxylic acid, the monocarboxylic acid and the diamine contain saturated alkyl or alkylene groups, i.e., alkyl or alkylene groups that contain no carbon-carbon multiple bonds. Preferably, the alkyl or alkylene group is unsubstituted. Preferably, the wax comprises a reaction product of 32% to 40% of a C₈-C₁₀ linear dicarboxylic acid, 43% to 53% of a C₁₆-C₁₈ monocarboxylic acid, and 14% to 18% of a diamine in which n is 2 or 3. Preferably, the wax comprises a reaction product of a C₁₀ linear dicarboxylic acid, a C₁₈ monocarboxylic acid and ethylene diamine. Preferably, the wax comprises a reaction product of sebacic acid, stearic acid and ethylene diamine. Preferably, the wax comprises a reaction product of 35% to 37% sebacic acid, 47% to 49% stearic acid and 15.5% to 16.5% ethylene diamine.

Preferably, the total number of equivalents of carboxylic acid reactants is approximately equal to the total number of equivalents of amine reactants. Preferably, the ratio of equivalents of carboxylic acid reactants to equivalents of amine reactants is from 0.97 to 1.06, more preferably from 0.99 to 1.03, more preferably from 1.0 to 1.03 and most preferably from 1.0 to 1.02. If the numbers of equivalent of carboxylic acid and amine are not approximately equal, the resulting wax will have residual acidity or basicity which is undesirable in metal sintering applications. Residual basicity is especially undesirable. Preferably, the acid number of the wax, in mg KOH/g, is no more than 12, more preferably no more than 10, more preferably no more than 9, and most preferably no more than 8; preferably the acid number is no less than 4, more preferably no less than 6. Preferably, the base number of the wax, in mg KOH/g, is no more than 8, preferably no more than 6, more preferably no more than 4, and most preferably no more than 3.

In one embodiment of the invention, the condensation reaction between the reactants used to produce the wax is performed at a temperature from 240°C to 300°C, preferably from 250°C to 290°C, and most preferably from 260°C to 280°C. In another preferred embodiment of the invention, the dicarboxylic acid and the diamine are allowed to react first, preferably at a temperature from 120°C to 170°C, more preferably from 125°C to 150°C. Preferably, when the dicarboxylic acid is a solid at ambient temperature, the dicarboxylic acid is melted prior to introduction of diamine, and the exothermic reaction is then controlled within the aforementioned ranges. After the reaction is substantially complete, the monocarboxylic acid is added and the temperature increased to the range from 240°C to 300°C, preferably from 250°C to 290°C, and most preferably from 260°C to 280°C. In one preferred embodiment of the invention, the reaction is carried out with sub-surface addition of the diamine, i.e., the diamine is added below the surface of reaction mixture. The reaction may be performed at atmospheric pressure, or at an elevated pressure. Preferably the reaction mixture is liquid. Optionally, a solvent is used that can be removed by distillation when the reaction is complete. Preferred solvents are those which are not reactive with either aliphatic carboxylic acids or aliphatic amines, for example, aromatic hydrocarbon solvents. Preferably, a catalyst is used, for example, an acid catalyst, including phosphoric and sulfuric acid, a basic catalyst, including tertiary amines, dehydrating agents, including POCl₃, and metal salts, including CsCl. Optionally an antioxidant is added to the reaction mixture to prevent discoloration of the wax. Preferably, the wax is ground to produce an average particle size less than 10 microns, more preferably less than 5 microns, and most preferably less than 4 microns. The bulk density of the ground wax preferably is at least 0.4 g/mL, most preferably at least 0.5 g/mL.

In a preferred embodiment of the invention, the wax comprises a compound having the following formula 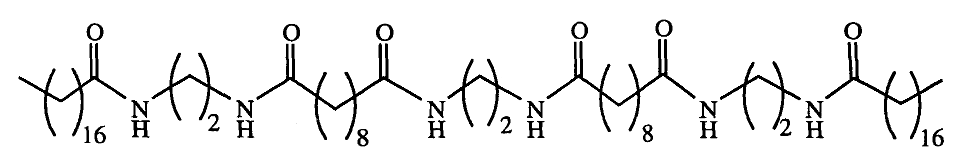 The reaction of sebacic acid, stearic acid and ethylene diamine will produce the compound shown above, along with variants having different numbers of sebacic acid and ethylene diamine residues. For example, the reaction will also produce a compound having three sebacic acid residues, four ethylene diamine residues and two stearic acid residues.

The present invention is further directed to a iron-based powder composition useful for sintering. The iron-based powder composition comprises the wax of this invention and an iron-based powder. Information on iron-based powders used for sintering can be found, for example, in U.S. Pat. Nos. 5,484,469 and 6,395,687.

### EXAMPLES

Example 1. A 500 mL 3-neck flask equipped with a condenser, addition funnel, nitrogen inlet and exit port was charged with sebacic acid (72.76 g, 0.36 moles) and BHT (2,6-di-tert-butyl-4-methylphenol) (0.53 g). Under a nitrogen purge, ethylene diamine (32.41 g, 0.54 moles) was added slowly to the stirred sebacic acid. The exothermic reaction heated the mixture to 82°C. When all of the ethylene diamine had been added, the mixture was heated to 175°C. After 45 minutes, the mixture began to solidify. Stearic acid (98.52 g, 0.36 moles) was added and the mixture was heated to 260°C and maintained at temperature for 2 hours. The product was poured into a pan and allowed to cool and solidify. The product melted from 476-490°F (247-254°C).

Example 2. To a reactor equipped with stirrer, condenser, nitrogen purge, and addition funnel with a dip tube, add sebacic acid (202.1 g, 1 mole, 2 eq.) and heat the acid above its melting point (150°C). Slowly add ethylene diamine (90.04 g, 1.5 mole, 3 eq.) through the deep tube (sub-surface addition) while controlling the exotherm in 125-150°C range. After all the amine has been added, slowly add stearic acid (276.66 g, 1 mole, 1 eq.) and gradually raise the temperature to 260°C and maintain the temperature for 2 hrs. Pour the reaction mixture into a pan and allow to solidify. The solid wax is then shaved into small pieces and ground to an average particle size of less than 5 µ.

## Claims

1. A wax comprising a reaction product of:
(a) 30% to 45% of a C₆-C₁₂ linear dicarboxylic acid;
(b) 40% to 60% of a C₁₀-C₂₂ monocarboxylic acid; and
(c) 12% to 20% of a diamine of formula H₂N(CH₂)ₙNH₂, wherein n is an integer from 2 to 6.

2. The wax of claim 1 in which said C₆-C₁₂ linear dicarboxylic acid is a C₈-C₁₀ linear dicarboxylic acid, said C₁₀-C₂₂ monocarboxylic acid is a C₁₆-C₁₈ monocarboxylic acid, and n is 2 or 3.

3. The wax of claim 2 which is a reaction product of 32% to 40% of a C₈-C₁₀ linear dicarboxylic acid, 43% to 53% of a C₁₆-C₁₈ monocarboxylic acid, and 14% to 18% of said diamine.

4. The wax of claim 3 in which said C₈-C₁₀ linear dicarboxylic acid is a C₁₀ linear dicarboxylic acid, said C₁₆-C₁₈ monocarboxylic acid is a C₁₈ monocarboxylic acid, and said diamine is ethylene diamine.

5. The wax of claim 4 which is a reaction product of 34% to 38% of a C₁₀ linear dicarboxylic acid, 46% to 50% of a C₁₈ monocarboxylic acid, and 15% to 17% of ethylene diamine.

6. The wax of claim 5 which is a reaction product of sebacic acid, stearic acid and ethylene diamine.

7. The wax of claim 1 in which a ratio of total number of equivalents of carboxylic acid reactants to total number of equivalents of amine reactants is from 0.97 to 1.06.

8. The wax of claim 7 in which said C₆-C₁₂ linear dicarboxylic acid contains a saturated alkylene group, said C₁₀-C₂₂ monocarboxylic acid contains a saturated alkyl group, and said diamine contains a saturated alkylene group; n is 2 or 3; and the ratio of total number of equivalents of carboxylic acid reactants to total number of equivalents of amine reactants is from 1.0 to 1.03.

9. The wax of claim 8 which is produced by first combining said C₆-C₁₂ linear dicarboxylic acid and said diamine, with sub-surface addition of the diamine, and then adding said C₁₀-C₂₂ monocarboxylic acid.

10. The wax of claim 8 in which said C₆-C₁₂ linear dicarboxylic acid is sebacic acid, said C₁₀-C₂₂ monocarboxylic acid is stearic acid and n is 2.
